Europäisches Patentamt

European Patent Office

Office européen des brevets

(19)

(11) **EP 1 095 903 A1**

(12) **EUROPEAN PATENT APPLICATION**

(43) Date of publication:
**02.05.2001 Bulletin 2001/18**

(51) Int Cl.[7]: **C01B 3/36**, C01B 3/38

(21) Application number: **99308554.7**

(22) Date of filing: **28.10.1999**

(84) Designated Contracting States:
**AT BE CH CY DE DK ES FI FR GB GR IE IT LI LU MC NL PT SE**
Designated Extension States:
**AL LT LV MK RO SI**

(71) Applicant: **SHELL INTERNATIONALE RESEARCH MAATSCHAPPIJ B.V.**
**2596 HR Den Haag (NL)**

(72) Inventors:
• **Buss, Grahame Yarvic**
  **Ince Chester, CH2 4NU Cheshire (GB)**
• **Kuipers, Herman Pieter Charles Eduard**
  **1031 CM Amsterdam (NL)**
• **Wentinck, Hendrik Martinus**
  **1031 CM Amsterdam (NL)**

(54) **Process for the oxidation of a hydrocarbonaceous feedstock**

(57)    A process for the oxidation of a hydrocarbonaceous feedstock with an oxygen-containing gas, wherein the hydrocarbonaceous feedstock is mixed with the oxygen-containing gas prior to oxidation in an oxidation zone and wherein an oxidant is added to the hydrocarbonaceous feedstock before the feedstock is mixed with the oxygen-containing gas in an amount in the range of from 0.005 to 10% (mole/mole) of oxidant based on the feedstock.

## Description

The present invention relates to a process for the oxidation of a hydrocarbonaceous feedstock, in particular a process for the catalytic partial oxidation of a hydrocarbonaceous feedstock.

Partial oxidation of a hydrocarbonaceous feedstock, in particular hydrocarbons, in the presence of a catalyst is an attractive route for the preparation of mixtures of carbon monoxide and hydrogen, normally referred to as synthesis gas. The partial oxidation of hydrocarbons is an exothermic reaction represented by the equation:

$$C_nH_{2n+2} + n/2\ O_2 \rightarrow n\ CO + (n+1)\ H_2$$

There is literature in abundance on the catalysts and the process conditions for the catalytic partial oxidation of gaseous hydrocarbons, in particular methane. Reference is made, for instance, to EP-A-303 438, US-A-5,149,464, EP-B-576 096, and EP-A-629 578.

Since the catalytic partial oxidation reaction proceeds at very short contact times (in the order of tens of milliseconds), it is important that the reactants are well-mixed when brought into contact with the catalyst. Otherwise, the reaction will proceed at an undesirable stoichiometry and the desired product selectivity will not be obtained.

The mixture of the reactants of the catalytic partial oxidation process, i.e. a hydrocarbonaceous feedstock and an oxygen-containing gas, is highly reactive and explosive, especially at the mixing conditions which are typically applied, i.e. at elevated temperature and pressure and in amounts giving an oxygen-to-carbon ratio in the range of from 0.3 to 0.8.

In a catalytic partial oxidation process, the yield of carbon monoxide and hydrogen, i.e. conversion times selectivity, increases with increasing temperature of the mixture of hydrocarbonaceous feedstock and oxygen-containing gas that is fed to the catalyst. Thus, there is an incentive to increase the temperature of the mixture, but the temperature of the mixture is bound to a maximum set by the risks of ignition, such as auto ignition and particle induced ignition, and explosion. Moreover, for commercial applications, it is often desired to perform the mixing at elevated pressure, i.e. at pressures well above atmospheric pressure.

It has now been found that the risk for explosion and/or ignition, especially particle induced ignition, in a mixture of a hydrocarbonaceous feedstock and an oxygen-containing gas can be reduced, and therefore the temperature and pressure of the mixture can be increased, by adding a relatively small amount of oxidant to the hydrocarbonaceous feedstock before it is mixed with the oxygen-containing gas.

This finding may be advantageously applied in the above-mentioned catalytic partial oxidation process.

It will be appreciated that the present finding may also be applied in other oxidation processes wherein a mixture of hydrocarbonaceous feedstock and oxygen-containing gas may be formed prior to the actual oxidation. Non-limiting examples of such oxidation processes are non-catalytic partial oxidation, combustion and the oxidation step in autothermal reforming.

Accordingly, the present invention relates to a process for the oxidation of a hydrocarbonaceous feedstock with an oxygen-containing gas, wherein the hydrocarbonaceous feedstock is mixed with the oxygen-containing gas prior to oxidation in an oxidation zone and wherein an oxidant is added to the hydrocarbonaceous feedstock before the feedstock is mixed with the oxygen-containing gas in an amount in the range of from 0.005 to 10% (mole/mole) of oxidant based on the feedstock.

The addition of oxidant is especially advantageous in oxidation processes wherein the hydrocarbonaceous feedstock and the oxygen-containing gas are mixed at elevated temperature and/or at elevated pressure. Reference herein to elevated temperature and pressure is to temperatures well above room temperature and pressures well above atmospheric pressure. In the process of the present invention, the mixture of hydrocarbonaceous feedstock and oxygen-containing gas preferably has a temperature in the range of from 100 to 800 °C, more preferably of from 150 to 600 °C, even more preferably of from 200 to 400 °C. The pressure at which the feedstock and the oxygen-containing gas are mixed is preferably in the range of from 2 to 100 bar (absolute), more preferably of from 5 to 80 bar (absolute), even more preferably of from 10 to 50 bar (absolute).

The oxidant to be added is preferably oxygen or water, more preferably oxygen. Oxygen may be added as substantially pure oxygen or as a diluted oxygen stream, such as air or oxygen-enriched air. If the oxidant is water, it is preferred to add the water as steam. Alternatively, atomised liquid water may be added to a preheated stream of the hydrocarbonaceous feedstock.

In the process of the invention, the oxidant is added to the hydrocarbonaceous feedstock before the feedstock is mixed with the oxygen-containing gas, i.e. upstream of the zone where the feedstock and the oxygen-containing gas are mixed. The oxidant may for example be injected into the conduit supplying the feedstock to the mixing zone. It is advantageous to add the oxidant well before the mixing zone such that the oxidant is well-mixed through the hydrocarbonaceous feedstock when the feedstock is mixed with the oxygen-containing gas. Preferably, the residence time of the oxidant in the stream of hydrocarbonaceous feedstock before it is entering the mixing zone is at least 0.5 second, more preferably at least 1 second.

Typically in catalytic partial oxidation processes, the feedstock and the oxygen-containing gas are preheated before mixing them. In the process of the invention the oxidant may be added to the feedstock before the feedstock is preheated or to the preheated feedstock.

Especially in the case that the oxidant added is oxygen, the amount of oxidant added to the feedstock must be below the flammability limit of the thus-obtained feedstock-oxidant mixture, i.e. the amount may not be so high that ignition or explosion of the feedstock-oxidant mixture occurs at the prevailing process conditions. Preferably, the oxidant is added in an amount in the range of from 0.01 to 5%(mole/mole) based on the feedstock, more preferably of from 0.02 to 2% (mole/mole), even more preferably of from 0.05 to 1% (mole/mole) .

Suitable hydrocarbonaceous feedstocks comprise hydrocarbons, oxygenates or mixtures thereof. Oxygenates are defined as molecules containing apart from carbon and hydrogen atoms at least 1 oxygen atom which is linked to either one or two carbon atoms or to a carbon atom and a hydrogen atom. Examples of suitable oxygenates are methanol, ethanol, dimethyl ether and the like.

Preferred hydrocarbonaceous feedstocks comprise methane, natural gas, associated gas or other sources of "light hydrocarbons". In this respect, the term "light hydrocarbon" is a reference to hydrocarbons having 1 to 5 carbon atoms. Preferably the feedstock comprises methane in an amount of at least 50% by volume, more preferably at least 70% by volume, even more preferably at least 80% by volume.

The oxygen-containing gas that is mixed with the hydrocarbonaceous feedstock prior to oxidation may be oxygen, air, or oxygen-enriched air, preferably oxygen.

The oxidation process of the present invention is preferably a partial oxidation process, more preferably a catalytic partial oxidation process.

In the catalytic partial oxidation process according to the invention, a mixture of hydrocarbonaceous feedstock and oxygen-containing gas is contacted with a catalyst to obtain synthesis gas by means of an exothermic reaction. Suitable catalyst are known in the art.

The hydrocarbonaceous feedstock and the oxygen-containing gas are preferably present in the mixture in such amounts as to give an oxygen-to-carbon ratio in the range of from 0.3 to 0.8, more preferably, in the range of from 0.45 to 0.75. References herein to the oxygen-to-carbon ratio refer to the ratio of oxygen in the form of molecules ($O_2$) to carbon atoms present in the hydrocarbon feedstock. Oxygen-to-carbon ratios in the region of the stoichiometric ratio of 0.5, i.e. ratios in the range of from 0.45 to 0.65, are especially preferred. If oxygenate feedstocks are used, e.g. methanol, oxygen-to-carbon ratios below 0.3 can suitably be used.

The mixture of hydrocarbonaceous feedstock and oxygen-containing gas may optionally comprise steam. If steam is present, the steam-to-carbon ratio is preferably in the range of from above 0.0 to 3.0, more preferably from 0.0 to 2.0. Optionally, the mixture may comprise carbon dioxide.

The hydrocarbonaceous feedstock and the oxygen-containing gas are preferably preheated, resulting in a preheated mixture of hydrocarbonaceous feedstock and oxygen-containing gas. It is an advantage of the catalytic partial oxidation process according to the present invention that the mixture may be heated to a relatively high temperature without the occurrence of ignition or explosion upstream of the catalyst. Preferably, the temperature of the mixture is in the range of from 100 to 800 °C. Due to the exothermic character of the catalytic partial oxidation reaction, the temperature of the gas leaving the catalyst is typically in the range of from 750 to 1400 °C, preferably of from 850 to 1350 °C.

The mixture may be contacted with the catalyst at any suitable gas hourly space velocity (expressed as normal litres of gas per kilogram of catalyst at STP conditions). Preferably, the gas hourly space velocity is in the range of from 20,000 to 100,000,000 Nl/kg/h, more preferably of from 50,000 to 50,000,000 Nl/kg/h, even more preferably of from 100,000 to 30,000,000 Nl/kg/h.

The invention will now be illustrated by means of the following examples.

EXAMPLE 1 (according to the invention)

Into a stream of 390 kg/h of natural gas, 0.1% (mole/mole) of pure oxygen was injected. After oxygen injection, the natural gas stream was preheated and fed to a mixing zone at a pressure of 30 bar (absolute). Simultaneously, a separate stream of 310 kg/h of pure oxygen having a temperature of 100 °C was fed to the mixing zone.

The preheating temperature of the natural gas stream was varied. Up to a preheating temperature of 360 °C, resulting in a temperature of the mixture in the mixing zone of 300 °C, no ignition was observed.

EXAMPLE 2 (comparative)

The same experiment as in Example 1 was carried out, without addition of oxygen to the natural gas stream. Ignition was observed at a temperature of the mixture in the mixing zone of 278 °C.

**Claims**

1. A process for the oxidation of a hydrocarbonaceous feedstock with an oxygen-containing gas, wherein the hydrocarbonaceous feedstock is mixed with the oxygen-containing gas prior to oxidation in an oxidation zone and wherein an oxidant is added to the hydrocarbonaceous feedstock before the feedstock is mixed with the oxygen-containing gas in an amount in the range of from 0.005 to 10% (mole/ mole) of oxidant based on the feedstock.

**2.** A process according to claim 1, wherein the mixture of hydrocarbonaceous feedstock and oxygen-containing gas has an elevated temperature, preferably a temperature in the range of from 100 to 800 °C, more preferably of from 150 to 600 °C, even more preferably of from 200 to 400 °C.

**3.** A process according to claim 1 or 2, wherein the hydrocarbonaceous feedstock is mixed with the oxygen-containing gas at an elevated pressure, preferably at a pressure in the range of from 2 to 100 bar (absolute), more preferably of from 5 to 80 bar (absolute), even more preferably of from 10 to 50 bar (absolute).

**4.** A process according to any of the preceding claims, wherein the oxidant is oxygen or water, preferably oxygen.

**5.** A process according to any of the preceding claims, wherein an amount of oxidant in the range of from 0.01 to 5% (mole/mole) is added, preferably of from 0.02 to 2% (mole/mole), more preferably of from 0.05 to 1% (mole/mole).

**6.** A process according to any of the preceding claims, wherein the hydrocarbonaceous feedstock comprises methane, natural gas, associated gas or a source of light hydrocarbons, preferably natural gas or methane.

**7.** A process according to any of the preceding claims, wherein the oxygen-containing gas is oxygen.

**8.** A process according to any of the preceding claims, which is a process for the partial oxidation of the hydrocarbonaceous feedstock, preferably for the catalytic partial oxidation of the hydrocarbonaceous feedstock.

European Patent Office

# EUROPEAN SEARCH REPORT

Application Number

EP 99 30 8554

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 673 877 A (EXXON RESEARCH ENGINEERING CO) 27 September 1995 (1995-09-27) * the whole document * | 1-8 | C01B3/36 C01B3/38 |
| A | DATABASE WPI Section Ch, Week 197412 Derwent Publications Ltd., London, GB; Class E36, AN 1974-22205V XP002133587 & JP 49 008633 B (AJINOMOTO KK), 27 February 1974 (1974-02-27) * abstract * | 1 | |
| A | US 3 138 438 A (L. PÉRAS) 23 June 1964 (1964-06-23) * claim 1 * | 1 | |
| A | EP 0 842 894 A (TOPSOE HALDOR AS) 20 May 1998 (1998-05-20) * the whole document * | 1 | |
| A | US 4 089 639 A (REED ROBERT D ET AL) 16 May 1978 (1978-05-16) * claim 1 * | 1 | TECHNICAL FIELDS SEARCHED (Int.Cl.7) C01B B01J F23D |
| D,A | EP 0 629 578 A (SHELL INT RESEARCH) 21 December 1994 (1994-12-21) * example 1 * | 1-3,6-8 | F23C F23L |

The present search report has been drawn up for all claims

| Place of search | Date of completion of the search | Examiner |
|---|---|---|
| THE HAGUE | 21 March 2000 | Van der Poel, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 99 30 8554

This annex lists the patent family members relating to the patent documents cited in the above-mentioned European search report.
The members are as contained in the European Patent Office EDP file on
The European Patent Office is in no way liable for these particulars which are merely given for the purpose of information.

21-03-2000

| Patent document cited in search report | | Publication date | Patent family member(s) | | Publication date |
|---|---|---|---|---|---|
| EP 0673877 | A | 27-09-1995 | AU | 682751 B | 16-10-1997 |
| | | | AU | 1504695 A | 05-10-1995 |
| | | | CA | 2143962 A | 26-09-1995 |
| | | | DE | 69501225 D | 29-01-1998 |
| | | | DE | 69501225 T | 09-07-1998 |
| | | | NO | 951103 A | 26-09-1995 |
| | | | ZA | 9501926 A | 09-01-1996 |
| JP 49008633 | B | 27-02-1974 | NONE | | |
| US 3138438 | A | 23-06-1964 | NONE | | |
| EP 0842894 | A | 20-05-1998 | CN | 1185416 A | 24-06-1998 |
| | | | JP | 10245201 A | 14-09-1998 |
| US 4089639 | A | 16-05-1978 | CA | 1054041 A | 08-05-1979 |
| | | | DE | 2552882 A | 12-08-1976 |
| | | | FR | 2292932 A | 25-06-1976 |
| | | | GB | 1529808 A | 25-10-1978 |
| | | | IT | 1052380 B | 20-06-1981 |
| | | | JP | 51077933 A | 06-07-1976 |
| | | | NL | 7513222 A | 31-05-1976 |
| EP 0629578 | A | 21-12-1994 | AU | 672901 B | 17-10-1996 |
| | | | AU | 6478694 A | 22-12-1994 |
| | | | BR | 9402445 A | 24-01-1995 |
| | | | CA | 2126036 A | 19-12-1994 |
| | | | CN | 1101891 A,B | 26-04-1995 |
| | | | JP | 7010503 A | 13-01-1995 |
| | | | NO | 942284 A | 19-12-1994 |
| | | | NZ | 260621 A | 26-03-1996 |
| | | | ZA | 9404286 A | 10-02-1995 |

EPO FORM P0459

For more details about this annex : see Official Journal of the European Patent Office, No. 12/82